# EUROPEAN PATENT APPLICATION

(11) **EP 4 804 071 A1**
(43) Date of publication of application: **09.09.2026**
(21) Application number: 24887405.9
(22) Date of filing: 21.06.2024
(51) Int. Cl.: G06F 30/20

(54) **SIMULATION METHOD AND APPARATUS FOR TRAIN AIR SUPPLY SYSTEM SIMULATION MODEL**

(30) Priority: 06.11.2023 CN 202311464485
(71) Applicant: CRRC Changchun Railway Vehicles Co., Ltd., Changchun, Jilin 130000 (CN)
(72) Inventor: MENG, Fanhui, Changchun, Jilin 130000 (CN); YANG, Yang, Changchun, Jilin 130000 (CN); SONG, Yang, Changchun, Jilin 130000 (CN); YUAN, Chongyang, Changchun, Jilin 130000 (CN)
(74) Representative: Locas, Davide
(86) International application number: PCT/CN2024/100511
(87) International publication number: WO 2025/097781

(57) **Abstract**

A simulation method and apparatus for a train air supply system simulation model. The method comprises: on the basis of a preset actual train operation line, determining vehicle load change information during a stop at a station, air spring eccentric load condition information when the vehicle passes through a curved line, and working state information of each air-using device during train operation (S101); and inputting the vehicle load change information during the stop at the station, the air spring eccentric load condition information, and the working state information of each air-using device into a train air supply system simulation model, performing simulation of the train air supply system simulation model, and outputting air supply system performance parameters of the train air supply system simulation model (S 102). By means of performing simulation of the created train air supply system simulation model, the accuracy of analyzing the air supply system performance of the actual train air supply system can be improved, so that model selection for the actual train air supply system can be more accurately implemented.

## Description

### CROSS-REFERENCE TO THE RELATED APPLICATIONS

The present invention claims priority to Chinese Patent Application No. 2023114644855, filed with the China National Intellectual Property Administration on November 6, 2023 and entitled "SIMULATION METHOD AND APPARATUS FOR TRAIN AIR SUPPLY SYSTEM SIMULATION MODEL", which is incorporated herein by reference in its entirety.

### TECHNICAL FIELD

The present invention relates to the field of rail vehicle safety technology, and in particular, to a simulation method and apparatus for a rail vehicle (train) air supply system simulation model.

### BACKGROUND

With the development of society and the advancement of technology, rail vehicles are equipped with brake systems, air spring suspension systems, and other devices powered by compressed air to ensure safe operation of rail vehicles and passenger comfort, and the number of air-consuming devices installed is gradually increasing. Frequent start-stop operations in urban rail transit and changes in passenger load at stations cause air springs to charge and discharge, particularly during peak periods with large passenger flow, resulting in high air consumption. Analysis and calculation of air consumption of these air-consuming devices is the basis for selection and design of rail vehicle air supply systems.

Currently, a widely used estimation method calculates the single-cycle air consumption of air-consuming devices first, and then calculates the total air consumption of the system by multiplying the air consumption by the estimated number of operation cycles of each device during rail vehicle operation. However, because air-consuming devices operate for different durations and exhibit dynamic variations, the air supply requirements of the supply system differ accordingly, which increases the demand for precision in air consumption and operating conditions of the air supply system. Traditional estimation methods often lack sufficient precision and fail to meet such requirements.

### SUMMARY

In view of the foregoing, an objective of the present invention is to provide a simulation method and apparatus for a rail vehicle air supply system simulation model, which can improve the accuracy of analyzing the air supply performance of an actual rail vehicle air supply system, thereby enabling more precise selection of the actual rail vehicle air supply system.

An embodiment of the present invention provides a simulation method for a rail vehicle air supply system simulation model. The method includes:
determining vehicle load change information during a station stop, air spring load eccentricity information when a vehicle passes through a curved track, and working status information of each air-consuming device during rail vehicle operation based on a preset actual rail vehicle operation route;
inputting the vehicle load change information during the station stop, the air spring load eccentricity information, and the working status information of each air-consuming device into the rail vehicle air supply system simulation model, performing simulation on the rail vehicle air supply system simulation model, and outputting air supply system performance parameters of the rail vehicle air supply system simulation model; where the air supply system performance parameters include initial charging time of the rail vehicle air supply system, charging time under line operation conditions, pressure variations of each air cylinder and air spring, gap variations between an upper cover plate and a wear plate of the air spring, start-stop states of main and auxiliary air compressors, and air consumption of each air-consuming device; and
the rail vehicle air supply system simulation model includes an air-consuming device model, an air supply device model, a throttling and control apparatus model, an air reservoir model, a sensor model, and a piping assembly, where the air-consuming device model includes an air spring suspension system model, a brake system model, a coupler/pneumatic door model, a sanding model, a whistle model, and a tread cleaning model.

Further, the air spring suspension system model is created by performing the following steps:
creating the air spring suspension system model based on a working principle of a rail vehicle air spring suspension system; where the air spring suspension system model includes an air spring element, a height valve element, a differential pressure valve element, and an air spring piping element.

Further, the air spring suspension system model also includes an air spring load element, where the air spring load element is configured to integrate a total load on the air spring element, and the total load includes a vehicle body mass, a passenger load, and an eccentric load induced by the curved track.

Herein, the passenger load is input based on changes in a number of passengers using a first custom data table, the eccentric load induced by the curved track includes a first eccentric load caused by track unevenness and a second eccentric load caused by the curved track, and the first eccentric load is input using a second custom data table, and the second eccentric load is input using a third custom data table.

Further, the brake system model is simplified into an air consumption control model including a solenoid valve and a control signal; and air consumption of the brake system model is determined by performing the following steps:
reading pressure signals of air spring elements at two ends of a single bogie through a first port and a second port of the brake system model, and querying an air consumption data table to obtain air consumption for a single brake operation under a current air spring element pressure; where the air consumption data table is calculated based on brake pressures under different total vehicle masses and according to parameters of a brake cylinder and a brake pipe.

Further, the coupler/pneumatic door model is simplified into a pneumatic piston cylinder, the coupler/pneumatic door model includes only one port, and the coupler/pneumatic door model is connected to a main air supply line via a solenoid directional valve element; the air supply system performance parameters further include air consumption of the coupler/pneumatic door model; and the air consumption of the coupler/pneumatic door model is determined by performing the following steps:
setting a piston cylinder clearance volume, a piston-to-piston rod area, and a stroke limit based on actual coupler/pneumatic door samples or experimental data, thereby determining air consumption of the coupler/pneumatic door model during a single uncoupling or door opening/closing operation.

Further, the sanding model is created by performing the following steps:
creating the sanding model based on an air line principle of a rail vehicle sanding apparatus, where the sanding model includes a pressure-reducing valve element and a solenoid directional valve element, and the sanding model is configured to control sanding and drying by controlling opening and closing of the solenoid directional valve element, and to match air consumption rate for sanding and drying by setting a throttling area.

Further, the whistle model is configured to match air consumption rate of a rail vehicle whistle by setting an area of a throttling orifice, the whistle model includes only one port, and the port is connected to a main air supply line via a solenoid directional valve element.

Further, the tread cleaning model is simplified into a pneumatic piston cylinder, the tread cleaning model includes only one port, and the tread cleaning model is connected to a main air supply line via a solenoid directional valve element; the air supply system performance parameters further include air consumption of the tread cleaning model; and the air consumption of the tread cleaning model is calculated by performing the following steps:
setting a piston cylinder clearance volume, a piston-to-piston rod area, and a stroke limit based on actual tread cleaning device samples or experimental data, thereby determining air consumption of the tread cleaning model during a single operation.

Further, the air reservoir model includes a main air reservoir element, a brake air reservoir element, and an air-spring air reservoir element; the air supply system performance parameters further include a pressure value of each air reservoir element; and the pressure value of each air reservoir element is determined by performing the following steps:
inputting air pressure data of air supply devices, vehicle load change information, air spring load eccentricity information, and working status information of each air-consuming device into the rail vehicle air supply system simulation model to perform simulation, thereby determining the pressure value of each air reservoir element and generating a pressure curve of each air reservoir element in the rail vehicle air supply system simulation model.

An embodiment of the present invention further provides a simulation apparatus for a rail vehicle air supply system simulation model. The simulation apparatus for the rail vehicle air supply system simulation model includes:
an acquisition module, configured to determine vehicle load change information during a station stop, air spring load eccentricity information when a vehicle passes through a curved track, and working status information of each air-consuming device during rail vehicle operation based on a preset actual rail vehicle operation route;
a simulation module, configured to input the vehicle load change information during the station stop, the air spring load eccentricity information, and the working status information of each air-consuming device into the rail vehicle air supply system simulation model, perform simulation on the rail vehicle air supply system simulation model, and output air supply system performance parameters of the rail vehicle air supply system simulation model; where the air supply system performance parameters include initial charging time of the rail vehicle air supply system, charging time under line operation conditions, pressure variations of each air cylinder and air spring, gap variations between an upper cover plate and a wear plate of the air spring, start-stop states of main and auxiliary air compressors, and air consumption of each air-consuming device.

Herein, the rail vehicle air supply system simulation model includes an air-consuming device model, an air supply device model, a throttling and control apparatus model, an air reservoir model, a sensor model, and a piping assembly, where the air-consuming device model includes an air spring suspension system model, a brake system model, a coupler/pneumatic door model, a sanding model, a whistle model, and a tread cleaning model.

An embodiment of the present invention further provides an electronic device. The electronic device includes a processor, a memory, and a bus, where the memory stores machine-readable instructions executable by the processor. When the electronic device is in operation, the processor communicates with the memory via the bus, and the machine-readable instructions, when executed by the processor, perform steps of the simulation method for the rail vehicle air supply system simulation model described above.

An embodiment of the present invention further provides a computer-readable storage medium. The computer-readable storage medium stores a computer program, and the computer program, when executed by a processor, performs steps of the simulation method for the rail vehicle air supply system simulation model described above.

Compared with simulation of rail vehicle air supply systems in the prior art, the simulation method and apparatus for the rail vehicle air supply system simulation model provided in embodiments of the present invention determine vehicle load change information during a station stop, air spring load eccentricity information when a vehicle passes through a curved track, and working status information of each air-consuming device during rail vehicle operation based on a preset actual rail vehicle operation route, input the vehicle load change information during the station stop, the air spring load eccentricity information, and the working status information of each air-consuming device into the rail vehicle air supply system simulation model, perform simulation on the rail vehicle air supply system simulation model, and output air supply system performance parameters of the rail vehicle air supply system simulation model. By performing a simulation on the created rail vehicle air supply system simulation model, the accuracy of analyzing air supply system performance of an actual rail vehicle air supply system can be improved, thereby enabling a more precise selection of the actual rail vehicle air supply system.

To make the above objectives, features and advantages of the present invention comprehensible, preferred embodiments with reference to the accompanying drawings are described in detail below.

### BRIEF DESCRIPTION OF THE DRAWINGS

To more clearly illustrate the technical solutions of the embodiments of the present invention, the drawings required in the embodiments of the present invention will be briefly described below. It should be understood that the following drawings only illustrate some embodiments of the present invention and therefore should not be considered as limitations of the scope. For those of ordinary skill in the art, other related drawings can be obtained according to these drawings without inventive efforts.
FIG. 1 is a flowchart of a simulation method for a rail vehicle air supply system simulation model according to an embodiment of the present invention;
FIG. 2 is a schematic diagram of a structure of an air spring suspension system model according to an embodiment of the present invention;
FIG. 3 is a schematic diagram of a model structure of an air spring element according to an embodiment of the present invention;
FIG. 4 is a simulation performance curve diagram for an air spring element according to an embodiment of the present invention;
FIG. 5 is a schematic diagram of a model structure of a height valve element according to an embodiment of the present invention;
FIG. 6 is a schematic diagram of a model structure of a brake system model according to an embodiment of the present invention;
FIG. 7 is a schematic diagram of a structure of a sanding model according to an embodiment of the present invention;
FIG. 8 is a schematic diagram of a structure of a Tc car (Trailer with cab) air supply system simulation model according to an embodiment of the present invention;
FIG. 9 is a schematic diagram of a structure of an Mp car (Motor car with pantograph) air supply system simulation model according to an embodiment of the present invention;
FIG. 10 is a schematic diagram of a structure of an M car (Motor car) air supply system simulation model according to an embodiment of the present invention;
FIG. 11 is a schematic diagram of a model structure of a 6-car trainset air supply system according to an embodiment of the present invention;
FIG. 12 is a pressure curve diagram under initial air charging conditions of a Tc 1 car body according to an embodiment of the present invention;
FIG. 13 is a line chart of air spring element load eccentricity input according to an embodiment of the present invention;
FIG. 14 is a pressure curve diagram showing pressure variations of a Tc1 car at various locations and main/auxiliary air compressors under operational conditions according to an embodiment of the present invention;
FIG. 15 is a block diagram of a structure of a simulation apparatus for a rail vehicle air supply system simulation model according to an embodiment of the present invention; and
FIG. 16 is a schematic diagram of a structure of an electronic device according to an embodiment of the present invention.

Reference Numerals: 110. air spring suspension system model; 120. brake system model; 130. tread cleaning model; 140. whistle model; 150. sanding model; 160. wheel flange lubrication model; 210. air source apparatus element; 1500. simulation apparatus for rail vehicle air supply system simulation model; 1510. acquisition module; 1520. simulation module; 1600. electronic device; 1610. processor; 1620. memory; and 1630. bus.

### DETAILED DESCRIPTION OF THE EMBODIMENTS

To make the objectives, technical solutions, and advantages of embodiments of the present invention clearer, the following clearly and completely describes the technical solutions in embodiments of the present invention with reference to the accompanying drawings in embodiments of the present invention. It is clear that the described embodiments are merely some rather than all of the embodiments of the present invention. The assemblies of embodiments of the present invention, as generally described and illustrated in the figures herein, can be arranged and designed in a wide variety of different configurations. Therefore, the following detailed descriptions of the embodiments of the present invention provided in the drawings are not intended to limit the scope of the claimed disclosure, but merely to represent selected embodiments of the present invention. All other embodiments obtained by a person skilled in the art based on the embodiments of the present invention without creative efforts shall fall within the protection scope of the present invention.

First, application scenarios applicable to the present invention are introduced. The present invention is applicable to the technical field of rail vehicle safety.

It has been found through research that with the development of society and the advancement of technology, rail vehicles are equipped with brake systems, air spring suspension systems, and other devices powered by compressed air to ensure safe operation of rail vehicles and passenger comfort, and the number of air-consuming devices installed is gradually increasing. Frequent start-stop operations in urban rail transit and changes in passenger load at stations cause air springs to charge and discharge, particularly during peak periods with large passenger flow, resulting in high air consumption. Analysis and calculation of air consumption of these air-consuming devices is the basis for selection and design of rail vehicle air supply systems.

Currently, a widely used estimation method calculates the single-cycle air consumption of air-consuming devices first, and then calculates the total air consumption of the system by multiplying the air consumption by the estimated number of operation cycles of each device during rail vehicle operation. However, because air-consuming devices operate for different durations and exhibit dynamic variations, the air supply requirements of the supply system differ accordingly, which increases the demand for precision in air consumption and operating conditions of the air supply system. Traditional estimation methods often lack sufficient precision and fail to meet such requirements.

In view of this, the present invention provides a simulation method and apparatus for a rail vehicle air supply system simulation model, which can improve the accuracy of analyzing the air supply performance of an actual rail vehicle air supply system, thereby enabling more precise selection of the actual rail vehicle air supply system.

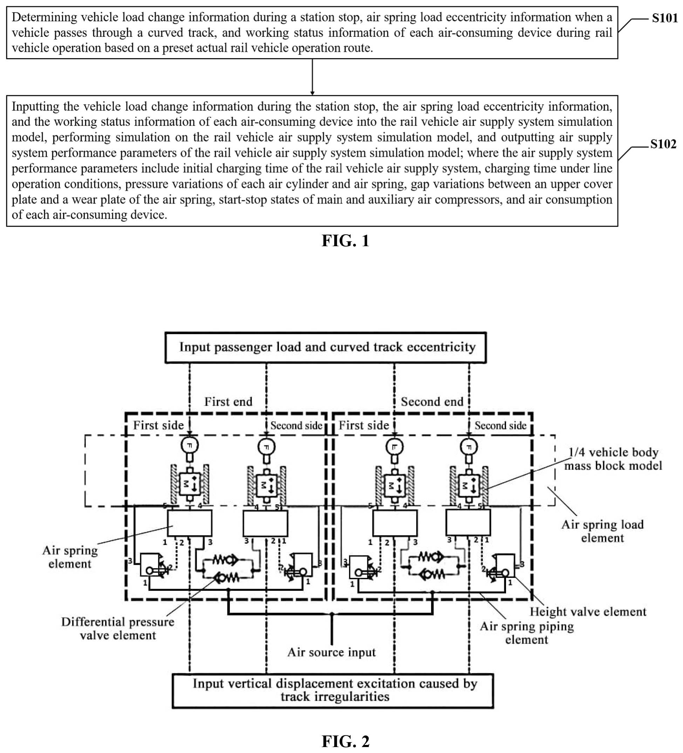

Referring to FIG. 1, FIG. 1 is a flowchart of a simulation method for a rail vehicle air supply system simulation model according to an embodiment of the present invention. As shown in FIG. 1, a simulation method for a rail vehicle air supply system simulation model provided in an embodiment of the present invention includes the following steps S101 to S102.

In step S101, vehicle load change information during a station stop, air spring load eccentricity information when a vehicle passes through a curved track, and working status information of each air-consuming device during rail vehicle operation are determined based on a preset actual rail vehicle operation route.

In this step, the preset actual rail vehicle operation route includes basic condition information and line condition information during rail vehicle operation. The basic operation information includes passenger boarding and alighting conditions during the station stop in the preset actual rail vehicle operation process. The line condition information includes track regularity condition and track curvature condition in the preset actual rail vehicle operation process.

The vehicle load change information during the station stop mainly results from changes in the number of passengers boarding and alighting at the station. The air spring load eccentricity information when a vehicle passes through a curved track may result from vehicle vibrations caused by track unevenness or from vehicle body tilting caused by the curved track, thereby causing air spring load eccentricity. The working status information of each air-consuming device includes, but is not limited to, working status information of the rail vehicle air spring suspension system, working status information of the rail vehicle brake system, working status information of the rail vehicle coupler/pneumatic door, working status information of the rail vehicle sanding apparatus, working status information of the rail vehicle whistle, and working status information of the rail vehicle tread cleaning apparatus.

In step S102, the vehicle load change information during the station stop, the air spring load eccentricity information, and the working status information of each air-consuming device are input into the rail vehicle air supply system simulation model, simulation is performed on the rail vehicle air supply system simulation model, and air supply system performance parameters of the rail vehicle air supply system simulation model are output; where the air supply system performance parameters include initial charging time of the rail vehicle air supply system, charging time under line operation conditions, pressure variations of each air cylinder and air spring, gap variations between an upper cover plate and a wear plate of the air spring, start-stop states of main and auxiliary air compressors, and air consumption of each air-consuming device.

In this embodiment of the present invention, according to a schematic diagram of an air line of an actual rail vehicle air supply system, each component in the actual rail vehicle air supply system is modeled, encapsulated, and connected to obtain a rail vehicle air supply system simulation model. Specifically, during modeling, each component model can be constructed in simulation software based on the working principle of the respective component, and then encapsulated into a corresponding super-element, which can be stored in a dedicated component library for convenient use. Furthermore, the rail vehicle air supply system simulation model can be constructed by calling each component model from the component library, performing connections according to the ports of each component model, and setting the component parameters. In this way, by performing simulation on the rail vehicle air supply system simulation model, air supply system performance parameters can be output, thereby enabling study of the working states of the rail vehicle air supply system under various operating conditions. Compared with the widely used estimation method, the simulation method for the rail vehicle air supply system simulation model provided in an embodiment of the present invention can improve accuracy in design analysis of an actual rail vehicle air supply system and has significant engineering application value for optimizing performance and reducing energy consumption of the actual rail vehicle air supply system.

In the embodiment of the present invention, the vehicle load change information during the station stop, the air spring load eccentricity information when the vehicle passes through the curved track, and the working status information of each air-consuming device during rail vehicle operation can be input into the rail vehicle air supply system simulation model via external data tables. Specifically, the external data tables can include, but are not limited to: passenger (a passenger number input table, indicating changes in a number of passengers at each station stop); brake (a brake instruction input table, indicating changes in braking commands during rail vehicle operation); curve (a curved track load eccentricity input table, based on the rail vehicle operation route); whistle (a whistle solenoid valve control signal input table, including operation time and duration); sand (a sanding apparatus solenoid valve control signal input table, including operation time and duration); and tread (a tread cleaning apparatus solenoid valve control signal input table, including operation time and duration).

It should be noted that the simulation method for the rail vehicle air supply system simulation model provided in an embodiment of the present invention is applied to a rail vehicle air supply system simulation model. The rail vehicle air supply system simulation model includes an air-consuming device model, an air supply device model, a throttling and control apparatus model, an air reservoir model, a sensor model, and a piping assembly, where the air-consuming device model includes an air spring suspension system model, a brake system model, a coupler/pneumatic door model, a sanding model, a whistle model, and a tread cleaning model.

As described above, the rail vehicle air supply system simulation model provided in an embodiment of the present invention is constructed based on the schematic diagram of the air line of the actual rail vehicle air supply system. The construction process of the rail vehicle air supply system simulation model provided in an embodiment of the present invention is described in detail as follows, i.e., includes the following contents.

First, the component models, including an air-consuming device model, an air supply device model, a throttling and control apparatus model, an air reservoir model, a sensor model, and a piping assembly, are constructed.

Then, according to the schematic diagram of the air line of the actual rail vehicle air supply system, each component model is encapsulated into a super-element and connected to form the completed rail vehicle air supply system simulation model.

It should be noted that, considering that actual air vehicle types may include Tc cars, Mp cars, and M cars, the rail vehicle air supply system simulation model provided in an embodiment of the present invention can correspond to any one of a Tc car air supply system simulation model, an Mp car air supply system simulation model, or an M car air supply system simulation model.

For clearer illustration of the internal structure of the rail vehicle air supply system simulation model provided in an embodiment of the present invention, the internal structure of each component model in the rail vehicle air supply system simulation model and the connection relationships between the models are described in detail as follows. The air supply device model includes an air source apparatus model, which includes an air compressor element, a safety valve element, and a control element. The throttling and control apparatus model includes a height valve element, a differential pressure valve element, a reducing valve element, a sequence valve element, a stop valve element, a solenoid directional valve element (2-position, 3-way), and a throttle orifice element. The air reservoir model includes a main air reservoir element, a brake reservoir element, and an air-spring air reservoir element. The sensor model includes a pressure sensor element and a flow sensor element. The air-consuming device model includes an air spring suspension system model, a brake system model, a coupler/pneumatic door model, a sanding model, a whistle model, and a tread cleaning model.

First, for the air supply apparatus model, the air source apparatus model has two ports. Port 1 of the air source apparatus model is connected to the main air reservoir element via piping, and port 2 of the air source apparatus model is configured to input the main air pressure signal.

Second, for the throttling and control apparatus model, the height valve element has three ports, where port 1 of the height valve element is connected to the reducing valve element and the air-spring air reservoir element via piping, port 2 of the height valve element is connected to port 1 of the air spring element in the air spring suspension system model to transmit the relative displacement signal between the vehicle body and the bogie, and port 3 of the height valve element is connected to port 5 of the air spring element. The differential pressure valve element has two ports and is configured to connect two different air spring elements, where port 1 of the differential pressure valve element is connected to port 3 of one air spring element, and port 2 of the differential pressure valve element is connected to port 3 of another air spring element. The reducing valve element has two ports, where port 1 of the reducing valve element is connected to port 1 of the height valve element, and port 2 of the reducing valve element is connected to the air-spring air reservoir element. The sequence valve element has two ports, where port 1 of the sequence valve element is connected to the air-spring air reservoir element, and port 2 of the sequence valve element is connected to the main air reservoir element via piping. The stop valve element has two ports, where port 1 and port 2 of the stop valve element are both connected to piping. The solenoid directional valve element has four ports. Port 1, port 2, and port 3 are connected to piping, and port 4 is configured to input the valve control signal. The throttle orifice element has two ports, where port 1 and port 2 of the throttle orifice element are both connected to piping.

Third, for the sensor model, the pressure sensor element has three ports, where port 1 and port 3 of the pressure sensor element are connected to the air line piping, and port 2 is configured to output the pressure signal at port 1 or port 3. The flow sensor element has three ports, where port 1 and port 3 of the flow sensor element are connected to the air line piping, and port 2 is configured to monitor the air consumption of the air-consuming device model.

Fourth, for the air-consuming device model, the brake system model has three ports, where port 1 and port 2 of the brake system model are configured to input the pressure signals of air spring elements at two ends of a single bogie in the air spring suspension system model, and port 3 of the brake system model is connected to the brake reservoir element in the air reservoir model via air line piping. The coupler/pneumatic door model has only one port, where the port of the coupler/pneumatic door model is connected to the main air supply line via a solenoid directional valve element. The sanding model has only one port, where the port of the sanding model is directly connected to the main air supply line. The whistle model has only one port, where the port of the whistle model is connected to the main air supply line via a solenoid directional valve element. The tread cleaning model has only one port, where the port of the tread cleaning model is connected to the main air supply line via a solenoid directional valve element. The air spring suspension system model is connected to port 1 of the reducing valve element via air line piping. In addition, the air-consuming device model can further include a wheel flange lubrication model and a duty ratio adjustment apparatus model. The wheel flange lubrication model has only one port, where the port of the wheel flange lubrication model can be connected to the main air supply line via a solenoid directional valve element. The duty ratio adjustment device model has only one port, where the port of the duty ratio adjustment device model is directly connected to the main air supply line. Herein, the external data tables used as inputs for the rail vehicle air supply system simulation model can further include flange (a wheel flange lubrication solenoid valve control signal input table, including operation time and duration), and adjust (a duty ratio adjustment apparatus solenoid valve control signal input table, including operation time and duration).

In an optional embodiment, the rail vehicle air supply system simulation model includes an air-consuming device model, wherein the air-consuming device model includes an air spring suspension system model. The creation process of the air spring suspension system model is described below. That is, the air spring suspension system model is created in the following manner: the air spring suspension system model is created based on the working principle of a rail vehicle air spring suspension system.

It should be noted that the air consumption of the rail vehicle air spring suspension system is significantly affected by the line conditions and operating conditions, and the air consumption is relatively high. Therefore, a more accurate analysis of the air consumption of the rail vehicle air spring suspension system is required. The rail vehicle air spring suspension system includes air springs with auxiliary air chambers, height valves, differential pressure valves, and associated piping. Two auxiliary air chambers on each bogie are connected through the differential pressure valve, and the charging and discharging of the air springs are controlled by the height valve. Based on this, an embodiment of the present invention constructs the air spring suspension system model shown in FIG. 2 according to the above working principle of the rail vehicle air spring suspension system. As shown in FIG. 2, the air spring suspension system model includes an air spring element, a height valve element, a differential pressure valve element, and an air spring piping element. Specifically, the air spring element has five ports, and the height valve element has three ports. Taking the air spring element at a first side of a first end as an example, the connection relationships among the elements are as follows: port 1 of the air spring element is connected to port 2 of the height valve element, port 5 of the air spring element is connected to port 3 of the height valve element, port 2 of the air spring element is configured to input an external vertical displacement excitation signal (i.e., vertical displacement excitation induced by track unevenness), port 3 of the air spring element is connected to the differential pressure valve element, port 4 of the air spring element is connected to a 1/4 vehicle body mass block model of the air spring load element, and port 1 of the height valve element is connected to the pressure-reducing valve element and the air-spring air reservoir element via piping. The differential pressure valve element is formed by two one-way valves connected in reverse parallel.

In an optional embodiment, as shown in FIG. 2, the air spring suspension system model also includes an air spring load element. The air spring load element is configured to integrate a total load on the air spring element, wherein the total load includes a vehicle body mass, a passenger load, and an eccentric load induced by the curved track. The passenger load is input based on changes in a number of passengers using a first custom data table, the eccentric load induced by the curved track includes a first eccentric load caused by track unevenness and a second eccentric load caused by the curved track, and the first eccentric load is input using a second custom data table, and the second eccentric load is input using a third custom data table.

In the above embodiment, the air spring load element provided in an embodiment of the present invention can include, but is not limited to, any one of the Tc car air spring load model, the Mp car air spring load model, or the M car air spring load model. For example, in a case where the air spring load element includes four mass blocks, and each mass block is supported by an air spring element, each mass block represents a 1/4 vehicle body mass block model. The changes in the number of passengers are input using the first custom data table, and the load is evenly distributed across the four mass blocks (i.e., each air spring element). Air spring elements on the same side are subjected to the same eccentric load caused by curved tracks, and the magnitude of the eccentric load is input using the two custom data tables, respectively. In this way, by applying custom input passenger loads or eccentric loads caused by curved tracks on the vehicle body, the operation of the rail vehicle air spring suspension system under changing passenger load or eccentric load when the vehicle passes through curves can be simulated, and the air consumption can be obtained.

It should be noted that the actual rail vehicle air spring includes an upper cover plate, an airbag, a support, and a rubber stack. A distance between the upper cover plate and the wear plate on the support is referred to as air spring gap E. During normal operation of the air spring, the airbag contains compressed air at sufficient pressure, and the airbag and the rubber stack connected in series support the vehicle body. When a fault occurs or during the air charging stage, if the internal pressure is insufficient to support the vehicle body and the load, the vehicle body is supported solely by the rubber stack, and the corresponding gap is 0. To maintain a substantially constant floor height of the vehicle body, an additional vertical deformation of the rubber stack caused by changing passenger load is compensated by changing gap E through air charging and discharging, thereby maintaining the air spring at approximately standard height HT. In the standard state of the rail vehicle air spring (referring to the state under empty load at standard height), gap E is generally approximately 20 mm.

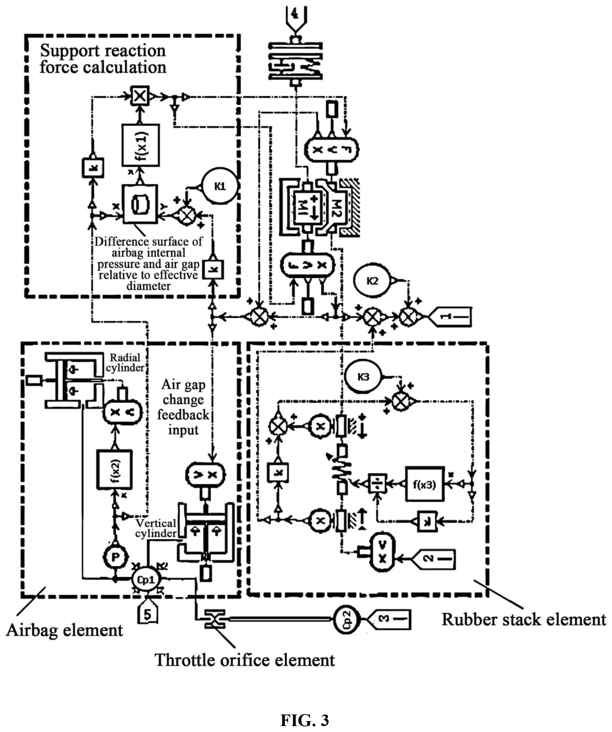

After understanding the working principle of the rail vehicle air spring, an embodiment of the present invention provides an air spring element as shown in FIG. 3 based on this principle. The creation process and internal structure of the air spring element are described below. Specifically, the air spring element is created as follows: the air spring element is created based on the working principle of the rail vehicle air spring. The air spring element includes an airbag element and a rubber stack element. The rubber stack element is configured to receive an external vertical displacement excitation signal and an external relative displacement signal between the vehicle body and the frame. The airbag element includes a variable-volume air chamber element Cp1, a radial cylinder element, and a vertical cylinder element.

Specifically, as shown in FIG. 3, in the embodiment provided by the present invention, the airbag element of the air spring element is constructed by one variable-volume air chamber element Cp1, a radial cylinder element, and a vertical cylinder element. The volume of the airbag element is equal to the sum of the dead volume of the variable-volume air chamber element Cp1 and the volumes of the two cylinder elements. The changes in the vertical volume of the airbag are simulated by relative movement of the piston and cylinder of the vertical cylinder element. The changes in the radial elastic deformation volume of the airbag are simulated by converting internal pressure signals into piston movement of the radial cylinder element. A cavity length of the vertical cylinder element corresponds to the gap, and the piston diameter determines a rate of air spring volume change with respect to the gap. In addition, the rubber stack element can be constructed using a variable-stiffness spring model, with stiffness values determined by fitting a load-displacement curve from actual test data to obtain more accurate nonlinear vertical characteristics. The initial compression corresponds to the compression under empty vehicle load.

In the above embodiment, as shown in FIG. 3, the height valve element can control the height of the air spring element at approximately the standard height. The changes in the cavity length of the vertical cylinder element can automatically compensate for vertical changes of the rubber stack element. The effective diameter of the air spring element is calculated by reading the pressure and gap of the airbag element, and the forces of compressed air acting on the upper cover plate M1 and the support/wear plate M2 are calculated. When the gap is 0, the upper cover plate M1 contacts the support/wear plate M2. In this case, a fixed-volume additional air chamber element Cp2 is connected to the airbag element through piping and throttling orifice element.

As shown in FIG. 3, the air spring load element has five ports. The relative displacement of the vehicle body and the frame is fed back to a height valve lever through port 1. The vertical displacement excitation signals caused by track irregularities are input to a bottom of the rubber stack element via port 2 through the frame. The additional air chamber element Cp2 is connected to a differential pressure valve air circuit through port 3. Port 4 is connected to a 1/4 vehicle body mass block model, and port 5 is connected to the height valve air circuit through piping. The airbag element and the additional air chamber element Cp2 are directly connected through the throttling orifice element. where K1 represents the initial gap, f(x1) represents the effective area, K2 represents an initial relative displacement, f(x2) represents a relationship between radial volume and pressure, K3 represents initial compression, and f(x3) represents the load-displacement curve. Finally, the overall assembly is encapsulated as the air spring element (super element) shown in FIG. 2.

For example, some relevant parameter values of the air spring element are provided for reference. The relevant parameter values of the air spring element protected by the present invention are not limited to the values listed in Table 1. The values in Table 1 correspond only to an example scenario, and specific content is shown in Table 1.

**Table 1**

| Physical quantity | Value |
|---|---|
| Rate of change of airbag element volume with respect to gap α/(L·mm⁻¹) | 0.196 |
| Rate of change of airbag element volume with respect to pressure β/(L·kPa⁻¹) | 0.009 |
| Airbag element volume in standard state V_{bo}/L | 35.5 |
| Diameter of throttling orifice element dₒ/mm | 14 |
| Additional air chamber element volume Vₐ/L | 60 |
| Piping length Lₚ/m, inner diameter dₚ/mm | 2, 38 |

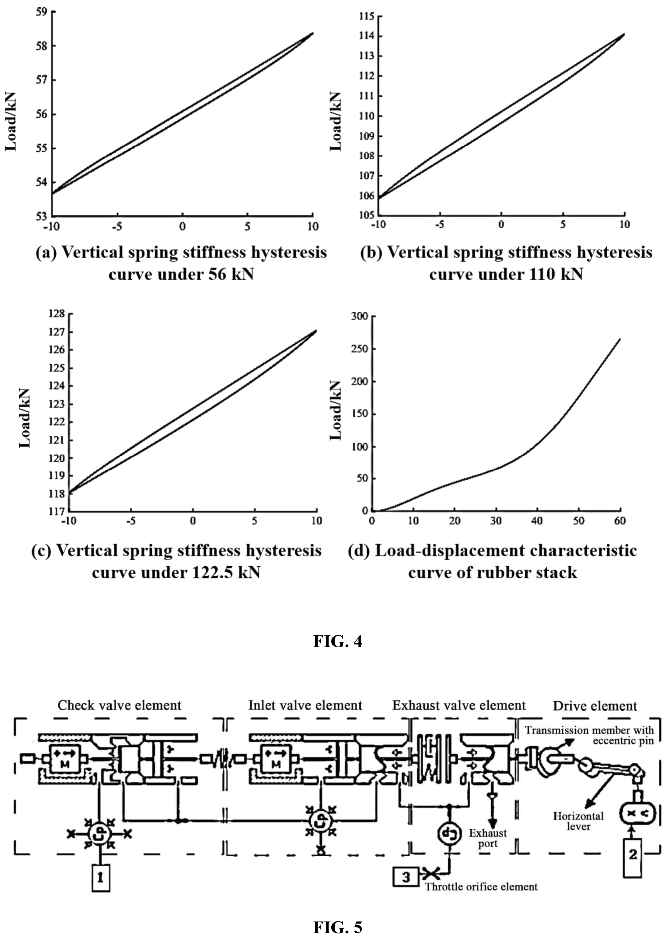

In the above embodiment, the accuracy of the air spring element affects calculation results of the air-consuming devices. The performance of the air spring element can be analyzed in accordance with provisions in TB/T2841-2019 for vertical static stiffness testing of air spring elements, pressure-load characteristic testing, and auxiliary spring (i.e., rubber stack) load-displacement characteristic testing methods. For example, FIG. 4 shows a simulation performance curve of the air spring element according to an embodiment of the present invention. The simulation performance curve includes (a) spring vertical stiffness hysteresis curve under 56 kN, (b) spring vertical stiffness hysteresis curve under 110 kN, (c) spring vertical stiffness hysteresis curve under 122.5 kN, and (d) rubber stack load-displacement characteristic curve. The amplitude is 10 mm and the velocity is 5 mm/s. Through the above simulation, the maximum relative error of the pressure-load characteristic under 56 kN, 110 kN, and 122.5 kN is below 0.02, the maximum relative error of vertical static stiffness is below 1.03, and the maximum relative error of rubber stack vertical stiffness is below 4.29. Therefore, the simulation results of the air spring element provided by the embodiment of the present invention meet performance requirements of actual rail vehicle air springs. The vertical static stiffness kₛₜ is calculated using the following formula:
${k}_{st} = \frac{{F}_{max} - {F}_{min}}{2 {d}_{Z}} ;$ where Fₘₐₓ is the maximum load, Fₘᵢₙ is the minimum load, d_{z} represents the amplitude, and d_{z} can be 10 mm.

It should be noted that an actual non-delay type rail vehicle height valve can be functionally divided into an inlet valve, an exhaust valve, and a check valve. The intake port of the rail vehicle height valve communicates with an air-spring air reservoir, the outlet communicates with the air spring, and the exhaust port communicates with the atmosphere. The valve body of the height valve is mounted on the vehicle body, a left end of a lever is fixedly connected to a rotatable transmission member, and a right end is connected to a bogie frame. For the working principle of the rail vehicle height valve, when passenger load changes or when the vehicle passes through a curved track, a relative height between the vehicle body and the bogie frame changes, causing the lever to rotate about a left end. A pin on an eccentric hole of the rotatable transmission member converts rotation into left-right translation of the valve stem. When the valve stem moves left, the inlet valve core is pushed open, and air pressure pushes open the check valve core to charge the air spring, causing the vehicle body height to gradually rise. When the valve stem moves right, the air spring discharges to the atmosphere through the gap between the inlet valve core and the valve stem (which can be regarded as the exhaust valve), causing the vehicle body height to gradually decrease. When the rail vehicle runs on a straight line, vehicle body amplitude is small, and the rotation angle of the lever rotation angle is also small. Due to gaps in the fit between the pin and the valve stem, the valve stem does not move, and neither intake nor exhaust occurs, resulting in a non-sensing zone within a certain angle range. Structurally, the rotation angle of the lever also affects the flow-through gap between the valve stem and the valve body, thereby affecting flow capacity.

In an optional embodiment, based on the working principle of the rail vehicle height valve, an embodiment of the present invention provides a height valve element created as follows: the height valve element as shown in FIG. 5 is created based on the working principle of the rail vehicle height valve. As shown in FIG. 5, the height valve element includes a check valve element, an inlet valve element, an exhaust valve element, and a driving element. The driving element receives an external relative displacement signal between the vehicle body and the frame through port 2. A driving end of the driving element is connected to one port of the exhaust valve element via a transmission member with an eccentric pin. Another port of the exhaust valve element is connected to one port of the inlet valve element, and another port of the inlet valve element is connected to the check valve element. The exhaust valve element is connected to the air spring element through port 3, and the check valve element is connected to the air-spring air reservoir element through port 1. Finally, the overall assembly is encapsulated as the height valve element (super element) shown in FIG. 2.

The working principle of the height valve element is described as follows. Specifically, the vertical relative displacement between the vehicle body and the frame is input to the right end of the lever through port 2. An arcsine of the ratio of displacement to lever length corresponds to a rotation angle of a cam connected to the left end of the lever. The cam profile curve is configured to satisfy the non-sensing zone range and the transmission relationship. When the cam drives the exhaust valve element core and the inlet valve element core to move left, only the inlet valve element opens. In this case, if the main air supply line has pressure, the check valve element can be pushed open, and port 1 communicates with port 3. When the cam drives the exhaust valve element core to move right, the exhaust valve element opens, and port 3 communicates with the atmosphere. The inlet valve element and exhaust valve element area gradients can be configured to satisfy flow characteristic requirements. For example, the performance of different sensing zone ranges of the height valve element provided by the embodiment of the present invention can be simulated according to the test methods specified in TB/T 2949-2015.

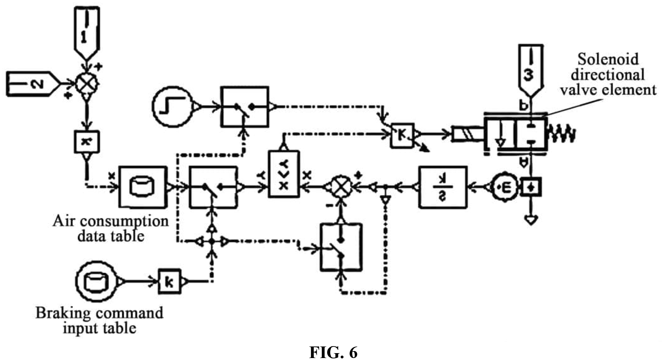

In an optional embodiment, the air-consuming device includes a brake system model, and the performance parameters of the air supply system include the air consumption of the brake system model. The composition of the brake system model and calculation of air consumption of the brake system model are described as follows. FIG. 6 is a schematic diagram of a model structure of a brake system model according to an embodiment of the present invention. As shown in FIG. 6, the brake system model is simplified into an air consumption control model including solenoid directional valve element and a control signal. The air consumption of the brake system model is determined by performing the following steps: reading pressure signals of air spring elements at two ends of a single bogie through a first port and a second port of the brake system model, and querying an air consumption data table to obtain air consumption for a single brake operation under a current air spring element pressure; where the air consumption data table is calculated based on brake pressures under different total vehicle masses and according to parameters of a brake cylinder and a brake pipe.

It should be noted that, considering that the main/auxiliary valves in the brake system include a plurality of valve components, the model is relatively complex. When the working states of the air supply system during long-term straight-line operation of the rail vehicle are simulated, simulation time is often long. If the complete brake system model is incorporated into the rail vehicle air supply system simulation model for calculation, the entire rail vehicle air supply system simulation model becomes overly complex, simulation solution time is significantly extended, and solution can be difficult to obtain. Meanwhile, the focus of the rail vehicle air supply system simulation model is on the rate and magnitude of air consumption of the brake system model rather than on the control process of the main/auxiliary valves on brake cylinder pressure. Therefore, the brake system model provided in the embodiment of the present invention is simplified into an air consumption control model. Specifically, port 1 and port 2 of the brake system model read pressure signals of air spring elements at two ends of a single bogie, and air consumption for a single brake operation under the current air spring pressure is obtained by querying the air consumption data table. The air consumption data table can be obtained by theoretical calculation of brake pressures under different total vehicle masses and parameter data of brake cylinders and brake pipes, by simulation based on a model of an actual rail vehicle brake system (including main/auxiliary valves, brake piping, and brake cylinders), or by actual testing of the brake system.

When a braking command is received, the solenoid directional valve element operates. The brake cylinder element is connected to the air circuit assembly through port 3 of the brake system element, allowing connection to the atmosphere and discharging the corresponding air volume. In this way, the total air consumption during braking of rail vehicles in mainline operation and pressure variation of the brake cylinder after each brake operation can be rapidly and accurately simulated.

In an optional embodiment, the air-consuming device includes a coupler/pneumatic door model, and the performance parameters of the air supply system include air consumption of the coupler/pneumatic door model. The composition and air consumption calculation of the coupler/pneumatic door model are described as follows. Specifically, the coupler/pneumatic door model is simplified into a pneumatic piston cylinder, the coupler/pneumatic door model includes only one port, and the coupler/pneumatic door model is connected to a main air supply line via a solenoid directional valve element; the air supply system performance parameters further include air consumption of the coupler/pneumatic door model; and the air consumption of the coupler/pneumatic door model is determined by performing the following steps: setting a piston cylinder clearance volume, a piston-to-piston rod area, and a stroke limit based on actual coupler/pneumatic door samples or experimental data, thereby determining air consumption of the coupler/pneumatic door model during a single uncoupling or door opening/closing operation.

It should be noted that, considering that the coupling/uncoupling of rail vehicles or opening/closing of pneumatic doors is accomplished by a single cylinder, the coupler/pneumatic door model is simplified into a single pneumatic piston cylinder and encapsulated as a super element in the present invention.

In an optional embodiment, the air-consuming device includes a sanding model, and the composition of the sanding model is described as follows. Specifically, the sanding model is created according to the following steps: creating the sanding model based on an air line principle of a rail vehicle sanding apparatus, where the sanding model includes a pressure-reducing valve element and a solenoid directional valve element, and the sanding model is configured to control sanding and drying by controlling opening and closing of the solenoid directional valve element, and to match air consumption rate for sanding and drying of the rail vehicle sanding apparatus by setting a throttling area.

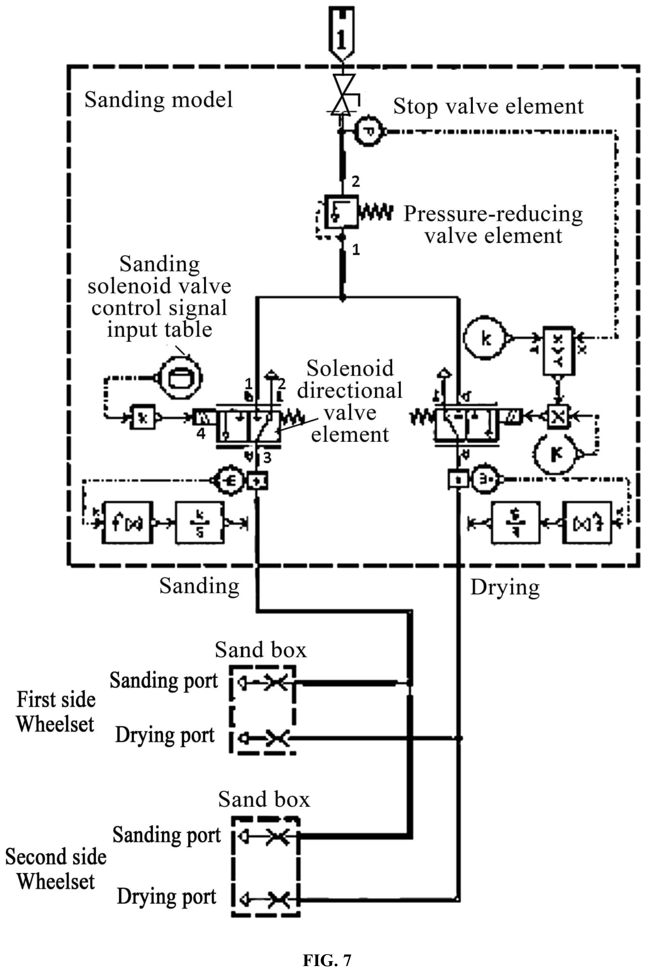

FIG. 7 is a schematic diagram of a structure of a sanding model according to an embodiment of the present invention. As shown in FIG. 7, the sanding model includes only one port for connection to the main air supply line. The sanding model consists of a pressure-reducing valve element and two solenoid directional valve elements (configured to control sanding and drying, respectively). The sanding and drying are controlled by the opening and closing of the solenoid directional valve elements. A sand box at each side is simplified into two drying/sanding throttle orifice elements communicating with the atmosphere. The throttle areas are configured to match air consumption rates of actual sanding and drying operations. In addition, sand (a sanding solenoid valve control signal input table, including operation time and duration) can be used as input for the sanding model. Specifically, port 2 of the pressure-reducing valve element is connected to the piping assembly. Port 1 of the pressure-reducing valve element is connected to port 1 of the two solenoid directional valve elements. Port 3 and port 2 of the solenoid directional valve elements communicate with the piping assembly, and port 4 of the solenoid directional valve element is configured to receive sanding solenoid valve control signals (input from the sand signal table).

In an optional embodiment, the air-consuming device includes a whistle model, and the composition of the whistle model is described as follows. Specifically, the whistle model is configured to match air consumption rate of a rail vehicle whistle by setting a throttle orifice area. The whistle model includes only one port, and this port is connected to the main air supply line through a solenoid directional valve element.

It should be noted that sound produced during operation of a rail vehicle whistle originates from high-frequency vibration of air flowing in the air passage. Therefore, the embodiment of the present invention simplifies the whistle model into a single throttle orifice and encapsulates the model as a super element. For example, when the main air pressure connected to the whistle model is 1000 kPa and the throttle orifice area is set to 5 mm² the calculated air consumption of the whistle model is 7.78 lbar/s, satisfying a requirement of air consumption of the whistle model ≤ 8 lbar/s.

In an optional embodiment, the air-consuming device includes a tread cleaning model, and the composition of the tread cleaning model is described as follows. Specifically, the tread cleaning model is simplified into a pneumatic piston cylinder, and the tread cleaning model includes only one port. The tread cleaning model is connected to the main air supply line through a solenoid directional valve element. The performance parameters of the air supply system further include the air consumption of the tread cleaning model. The air consumption of the tread cleaning model is calculated by performing the following steps: setting a piston cylinder clearance volume, a piston-to-piston rod area, and a stroke limit based on actual tread cleaning device samples or experimental data, thereby determining the air consumption of the tread cleaning model during a single operation.

It should be noted that an actual rail vehicle tread cleaning apparatus operates by pushing a grinding element against a wheel tread through a single cylinder. Therefore, the embodiment of the present invention simplifies the air-consuming model of the tread cleaning apparatus into a pneumatic piston cylinder, with compressed air input on the main air supply line side controlled through a solenoid directional valve element to drive the piston, and encapsulates the model as a super element. A tread (a tread cleaning apparatus solenoid valve control signal input table, including operation time and duration) can be used as input for the tread cleaning model.

In an optional embodiment, the air-consuming device includes an air reservoir model, and the composition of the air reservoir model is described as follows. Specifically, the air reservoir model includes a main air reservoir element, a brake air reservoir element, and an air-spring air reservoir element; the air supply system performance parameters further include a pressure value of each air reservoir element; and the pressure value of each air reservoir element is determined by performing the following steps: inputting air pressure data of air supply devices, vehicle load change information, air spring load eccentricity information, and working status information of each air-consuming device into the rail vehicle air supply system simulation model to perform simulation, thereby determining the pressure value of each air reservoir element and generating a pressure curve of each air reservoir element in the rail vehicle air supply system simulation model.

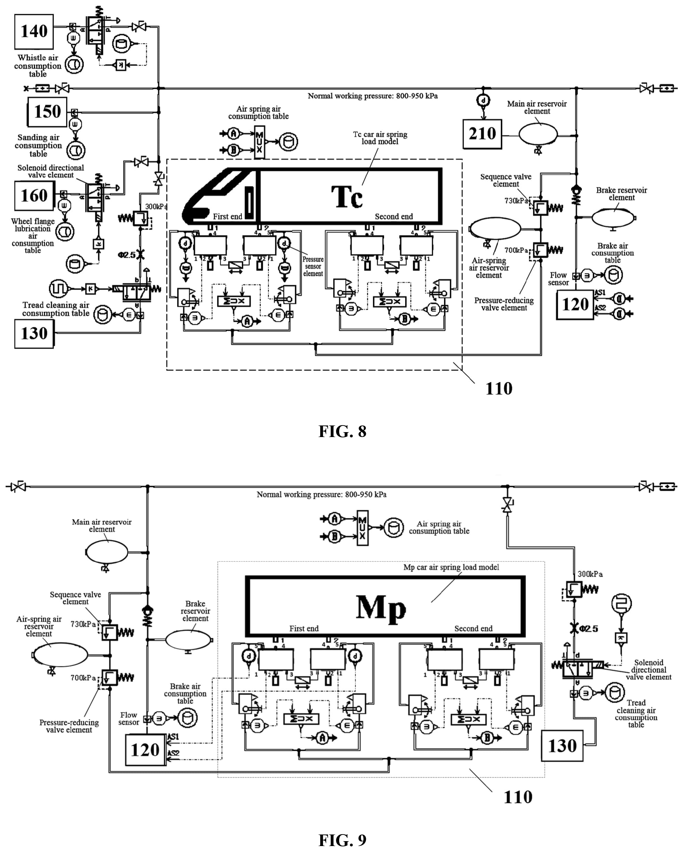

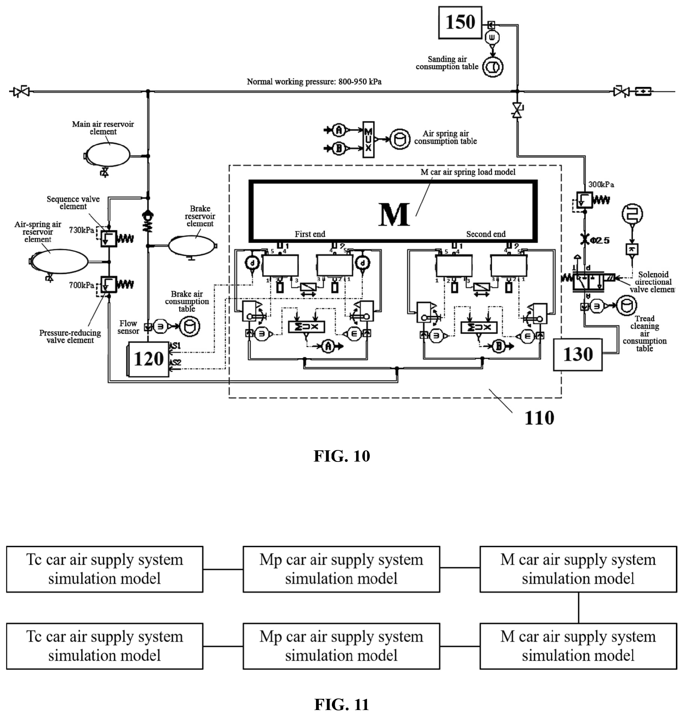

Based on the internal composition of the rail vehicle air supply system simulation model described above, for example, simulation models of air supply systems for three types of rail vehicles provided in an embodiment of the present invention are shown. Specifically, FIG. 8 is a schematic diagram of a structure of a Tc car air supply system simulation model according to the present invention; FIG. 9 is a schematic diagram of a structure of an Mp car air supply system simulation model according to the present invention; and FIG. 10 is a schematic diagram of a structure of an M car air supply system simulation model according to the present invention. An air supply system simulation model for each of the three types of rail vehicle shown in FIGS. 8-10 includes an air spring suspension system model 110, a brake system model 120, a tread cleaning model 130, a main air reservoir element, an air-spring air reservoir element, a brake cylinder element, a flow sensor element, a pressure-reducing valve element, a sequence valve element, and a solenoid directional valve element. The M car air supply system simulation model and the Mp car air supply system simulation model are substantially the same as the Tc car air supply system simulation model, except that the M car and Mp car models exclude the air source apparatus element 210 (i.e., the main air supply unit in the air supply device model), the whistle model 140, and the wheel flange lubrication model 160. The M car air supply system simulation model and the Tc car air supply system simulation model both include a sanding model 150. In addition, in the Tc car air supply system simulation model shown in FIG. 8, the air spring suspension system model 110 includes a Tc car air spring load model. In the Mp car air supply system simulation model shown in FIG. 9, the air spring suspension system model 110 includes an Mp car air spring load model. In the M car air supply system simulation model shown in FIG. 10, the air spring suspension system model 110 includes an M car air spring load model. In the Tc car air supply system simulation model, the pressure signal for controlling start and stop of the air compressor is obtained from the pressure of a pressure sensor connected to the main air supply line. In the air supply system simulation model for each type of rail vehicle, the piping model is a straight circular pipe, and pressure loss along the piping and heat transfer are considered. An inner surface roughness of the piping is 6.3 µm. The air consumption of the air-consuming device models is monitored by the flow sensor elements.

In an optional embodiment, as shown in FIG. 11, FIG. 11 is a schematic diagram of a model structure of a 6-car trainset air supply system according to an embodiment of the present invention. Specifically, the M car air supply system simulation model, the Mp car air supply system simulation model, and the Tc car air supply system simulation model are connected in series through the main air supply line to form one train. Using the same approach, another trainset is formed in the same manner by connecting the models in series.. The two trains are further connected in series through the main air supply line to construct a model of 6-car trainset air supply system as shown in FIG. 11, enabling simulation calculation of overall air supply system performance parameters for the trainset.

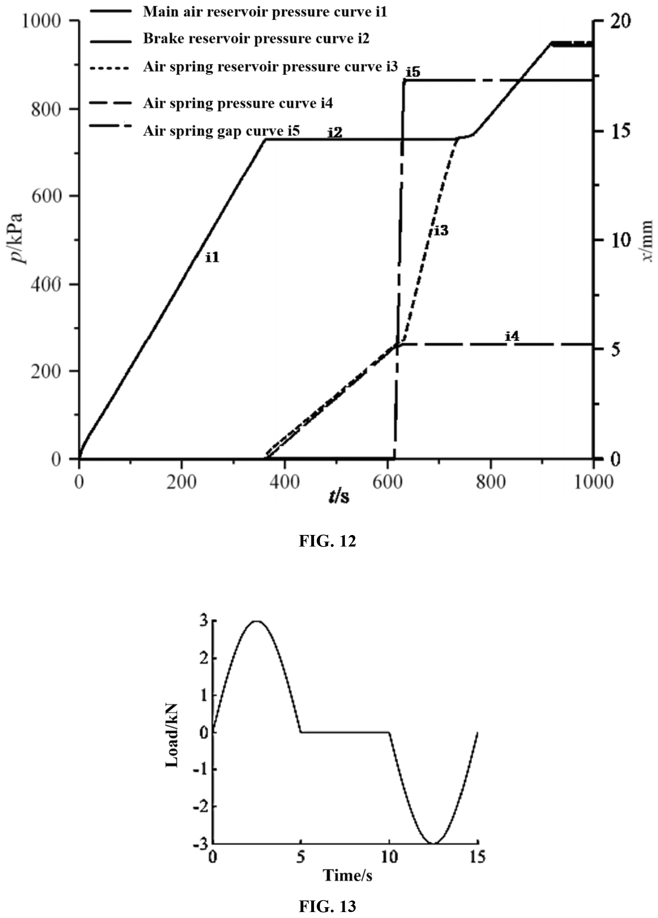

The simulation of Tc1 car during initial air charging of a 6-car trainset is provided in the following specific embodiment. FIG. 12 is a pressure curve diagram under initial air charging conditions of a Tc1 car body according to the present invention. FIG. 12 shows main air reservoir pressure curve i1, brake cylinder pressure curve i2, air-spring air reservoir pressure curve i3, air spring pressure curve i4, and air spring gap curve i5 of Tc1 car. The pressure of the main air reservoir element and brake cylinder element initially increases until 360.6 s, and the sequence valve element opens when main air pressure exceeds 730 kPa. Thereafter, the pressure temporarily maintains at 730.9 kPa. After opening of the sequence valve element, the pressure of the air-spring air reservoir element and air spring element begins to increase. After 612.6 s, internal pressure of the air spring element is sufficient to support the vehicle body, and the air spring gap gradually increases from 0 mm to 17.3 mm. The height valve element lever returns within the non-sensing range, and the valve closes. The air spring element maintains a balanced pressure of 260.9 kPa under empty load. After closure of the height valve element, the pressure of the air-spring air reservoir element initially rises rapidly, followed by simultaneous rise of all air reservoir pressures. Due to piping resistance along the main air supply line, a certain pressure gradient exists in the main air pressure of the Tc car, Mp car, and M car, i.e., main air pressure in Tc car, Mp car, and M car gradually decreases, and the air compressor stops after main air pressure in Tc car reaches 950 kPa. Subsequently, the main air pressure in Tc car balances with other cars, decreasing from 950 kPa to an overall train main air equilibrium pressure of 943.7 kPa. Finally, the initial charging time for the rail vehicle (i.e., continuous operation time of the air compressor) is 918.6 s, equivalent to 15.3 min.

In an optional embodiment, the simulation under mainline operation is described. Assuming that basic operational conditions and line conditions of a subway during mainline operation provided by an embodiment of the present invention are as shown in Table 2, the line includes 10 stations (including departure and terminal stations) and 9 curved tracks (with one curved track between each station). Passenger boarding and alighting for each train during each station stop are identical, and changes in the number of passengers are set according to actual conditions. The leading car sounds a whistle for 2 seconds each time the train starts. Load eccentricity of each air spring element caused by each curved track is as shown in FIG. 13 (FIG. 13 is a line chart of air spring element load eccentricity input according to the present invention). During each station stop, the train applies air brakes once (a total of 9 times), and brake cylinder pressure under each brake operation is assumed identical, e.g., 340 kPa. Each car has four air spring elements uniformly bearing the vehicle body and passenger load. The load eccentricity of the air spring element at a first side of a first end/a second end caused by each curved track is set according to actual conditions, and the load eccentricity of the air spring element at a second side is opposite in direction.

**Table 2**

| Dwell time at starting and terminal stations/s | Dwell time at intermediate stations/s | Running interval time between stations/s | Tc car AW₃ passenger capacity/person s (60 kg/person) | M/Mp car AW₃ passenger capacity/person s (60 kg/person) |
|---|---|---|---|---|
| 60 | 16 | 150 | 410 | 432 |

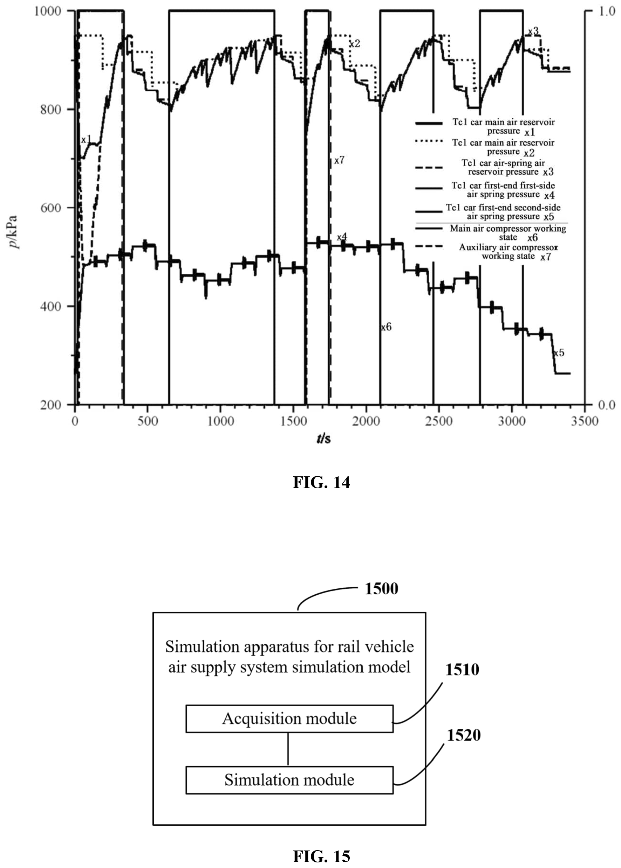

For example, FIG. 14 is a pressure curve diagram showing pressure variations of a Tc1 car at various locations and main/auxiliary air compressors under operational conditions, representing simulation results of Tc1 car during mainline operation. As shown in FIG. 14: (1) when passengers alight or board, vehicle load decreases or increases, causing vehicle body to rise or sink. Simultaneously, the height valve element operates in exhaust or charging state, and pressure of the air spring element decreases or increases, thereby maintaining the air spring element at approximately standard height and keeping the vehicle floor height substantially constant; (2) during peak passenger flow periods (such as starting stations or transfer stations), passenger load sharply increases, and the air spring element requires substantial air charging to reach equilibrium pressure to maintain vehicle floor height. Pressures of the air-spring air reservoir element and main air reservoir element rapidly decrease. However, the sequence valve element ensures that main air reservoir pressure does not drop below 700 kPa; (3) when main air reservoir pressure drops below 800 kPa, the main air compressor starts. If air supply rate still does not meet requirements, the auxiliary air compressor also starts when pressure further decreases below 750 kPa, thereby ensuring air supply demand and guaranteeing operational safety; (4) before reaching each station, brake cylinder element pressure decreases due to air consumption caused by brake system model operation; (5) when the rail vehicle passes through a curved track, load eccentricity of the air spring element causes the internal pressure to vary: charging pressure increases on the loaded side, and exhaust pressure decreases on the unloaded side A; (6) one-way valves are provided between the main air reservoir element and the brake cylinder element and air-spring air reservoir element, permitting air flow only from the main air reservoir element to other air reservoir elements; and (7) during mainline operation of 1600 s, total operating time of the main air compressor is 828.2 s, and the average duty ratio is 51.8%.

The present invention constructs a pneumatic simulation and analysis platform for the rail vehicle air supply system by using the structure and operating principle of the air-consuming devices. By combining actual rail vehicle operation route and passenger boarding and alighting conditions at each station stop, air consumption of air-consuming devices, pressure values at various locations, and working status information of the air supply system can be obtained during operation, thereby enabling analysis of air supply performance. The simulation method for the rail vehicle air supply system simulation model provided by the embodiment of the present invention provides an accurate approach for design analysis of the air supply system, and has practical engineering value for optimizing air supply system performance and reducing system energy consumption.

In summary, compared with the simulation method in the prior art, the simulation method for the rail vehicle air supply system simulation model provided in the embodiment of the present invention determines vehicle load change information during a station stop, air spring load eccentricity information when a vehicle passes through a curved track, and working status information of each air-consuming device during rail vehicle operation based on a preset actual rail vehicle operation route, inputs the vehicle load change information during the station stop, the air spring load eccentricity information, and the working status information of each air-consuming device into the rail vehicle air supply system simulation model, performs simulation on the rail vehicle air supply system simulation model, and outputs air supply system performance parameters of the rail vehicle air supply system simulation model. By performing simulation on the created rail vehicle air supply system simulation model, the accuracy of analyzing air supply system performance of an actual rail vehicle air supply system can be improved, thereby enabling more precise selection of the actual rail vehicle air supply system.

Referring to FIG. 15, FIG. 15 is a block diagram of a structure of a simulation apparatus for a rail vehicle air supply system simulation model according to an embodiment of the present invention. As shown in FIG. 15, the simulation apparatus 1500 for the rail vehicle air supply system simulation model includes:
an acquisition module 1510, configured to determine vehicle load change information during a station stop, air spring load eccentricity information when a vehicle passes through a curved track, and working status information of each air-consuming device during rail vehicle operation based on a preset actual rail vehicle operation route;
a simulation module 1520, configured to input the vehicle load change information during the station stop, the air spring load eccentricity information, and the working status information of each air-consuming device into the rail vehicle air supply system simulation model, perform simulation on the rail vehicle air supply system simulation model, and output air supply system performance parameters of the rail vehicle air supply system simulation model; where the air supply system performance parameters include initial charging time of the rail vehicle air supply system, charging time under line operation conditions, pressure variations of each air cylinder and air spring, gap variations between an upper cover plate and a wear plate of the air spring, start-stop states of main and auxiliary air compressors, and air consumption of each air-consuming device; the rail vehicle air supply system simulation model includes an air-consuming device model, an air supply device model, a throttling and control apparatus model, an air reservoir model, a sensor model, and a piping assembly, where the air-consuming device model includes an air spring suspension system model, a brake system model, a coupler/pneumatic door model, a sanding model, a whistle model, and a tread cleaning model.

The simulation apparatus 1500 for the rail vehicle air supply system simulation model provided in the embodiment of the present invention determines vehicle load change information during a station stop, air spring load eccentricity information when a vehicle passes through a curved track, and working status information of each air-consuming device during rail vehicle operation based on a preset actual rail vehicle operation route, inputs the vehicle load change information during the station stop, the air spring load eccentricity information, and the working status information of each air-consuming device into the rail vehicle air supply system simulation model, performs simulation on the rail vehicle air supply system simulation model, and outputs air supply system performance parameters of the rail vehicle air supply system simulation model. By performing simulation on the created rail vehicle air supply system simulation model, the accuracy of analyzing air supply system performance of an actual rail vehicle air supply system can be improved, thereby enabling more precise selection of the actual rail vehicle air supply system.

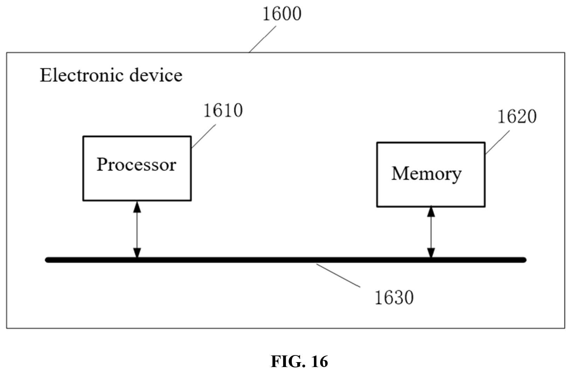

Referring to FIG. 16, FIG. 16 is a schematic diagram of a structure of an electronic device according to an embodiment of the present invention. As shown in FIG. 16, the electronic device 1600 includes a processor 1610, a memory 1620, and a bus 1630.

The memory 1620 stores machine-readable instructions executable by the processor 1610. During operation of the electronic device 1600, the processor 1610 communicates with the memory 1620 via the bus 1630. The machine-readable instructions, when executed by the processor 1610, perform steps of the simulation method for the rail vehicle air supply system simulation model described in the method embodiment shown in FIG. 1. For specific implementation, reference can be made to the method embodiment, which will not be repeated herein.

The present invention further provides a computer-readable storage medium. The computer-readable storage medium stores a computer program, and the computer program, when executed by a processor, can perform steps of the simulation method for the rail vehicle air supply system simulation model described in the method embodiment shown in FIG. 1. For specific implementation, reference can be made to the method embodiment, which will not be repeated herein.

Those skilled in the art can clearly understand that, for the convenience and conciseness of description, the specific operation processes of the above-described system, apparatus, and units can refer to the corresponding processes in the aforementioned method embodiment, which will not be repeated herein.

In several embodiments provided in the present invention, it should be understood that the disclosed systems, devices, and methods can be implemented in other manners. The described device embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some communication interfaces. The indirect couplings or communications connections between apparatuses or units may be implemented in electrical, mechanical, or other forms.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of embodiments.

In addition, the functional units in the embodiments provided in the present invention can be integrated into one processing unit, or each unit can exist physically independently, or two or more units can be integrated into one unit.

When the functions are implemented in the form of software functional units and sold or used as an independent product, the functions may be stored in a non-volatile processor-executable computer-readable storage medium. Based on such an understanding, the technical solutions of the present invention essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

Finally, it should be noted that the foregoing embodiments are only specific implementations of the present invention, which are merely intended to describe the technical solutions of the present invention, but are not to limit the present invention, and the protection scope of the present invention is not limited thereto. Although the present invention is described in detail with reference to the foregoing embodiments, those of ordinary skill in the art should understand that those skilled in the art within the technical scope disclosed in the present invention may still modify the technical solutions recorded in the foregoing embodiments or easily conceive of changes within the technical scope disclosed in the present invention, or make equivalent replacements for some of the technical features therein within the technical scope disclosed in the present invention; and these modifications, changes or replacements do not make the essence of the corresponding technical solutions deviate from the spirit and scope of the technical solutions of the embodiments of the present invention, and shall fall within the protection scope of the present invention. Therefore, the protection scope of the present invention shall be subject to the protection scope of the claims.

## Claims

1. A simulation method for a rail vehicle air supply system simulation model, **characterized by** comprising:
determining a vehicle load change information during a station stop, an air spring load eccentricity information when a vehicle passes through a curved track, and a working status information of each air-consuming device during a rail vehicle operation based on a preset actual rail vehicle operation route;
inputting the vehicle load change information during the station stop, the air spring load eccentricity information, and the working status information of each air-consuming device into the rail vehicle air supply system simulation model, performing a simulation on the rail vehicle air supply system simulation model, and outputting an air supply system performance parameters of the rail vehicle air supply system simulation model; the air supply system performance parameters comprise an initial charging time of the rail vehicle air supply system, a charging time under line operation conditions, pressure variations of each air cylinder and air spring, gap variations between an upper cover plate and a wear plate of the air spring, start-stop states of main and auxiliary air compressors, and an air consumption of each air-consuming device; and
the rail vehicle air supply system simulation model comprises an air-consuming device model, an air supply device model, a throttling and control apparatus model, an air reservoir model, a sensor model, and a piping assembly, wherein the air-consuming device model comprises an air spring suspension system model, a brake system model, a coupler/pneumatic door model, a sanding model, a whistle model, and a tread cleaning model.

2. The simulation method for the rail vehicle air supply system simulation model according to claim 1, wherein the air spring suspension system model is created by performing the following steps:
creating the air spring suspension system model based on a working principle of a rail vehicle air spring suspension system, wherein the air spring suspension system model comprises an air spring element, a height valve element, a differential pressure valve element, and an air spring piping element.

3. The simulation method for the rail vehicle air supply system simulation model according to claim 1, wherein the air spring suspension system model also comprises an air spring load element, the air spring load element is configured to integrate a total load on the air spring element, and the total load comprises a vehicle body mass, a passenger load, and an eccentric load induced by the curved track; and
the passenger load is input based on changes in a number of passengers using a first custom data table, the eccentric load induced by the curved track comprises a first eccentric load caused by track unevenness and a second eccentric load caused by the curved track, and the first eccentric load is input using a second custom data table, and the second eccentric load is input using a third custom data table.

4. The simulation method for the rail vehicle air supply system simulation model according to claim 1, wherein the brake system model is simplified into an air consumption control model comprising a solenoid valve and a control signal; and an air consumption of the brake system model is determined by performing the following steps:
reading pressure signals of air spring elements at two ends of a single bogie through a first port and a second port of the brake system model, and querying an air consumption data table to obtain an air consumption for a single brake operation under a current air spring element pressure; wherein the air consumption data table is calculated based on brake pressures under different total vehicle masses and according to parameters of a brake cylinder and a brake pipe.

5. The simulation method for the rail vehicle air supply system simulation model according to claim 1, wherein the coupler/pneumatic door model is simplified into a pneumatic piston cylinder, the coupler/pneumatic door model comprises only one port, and the coupler/pneumatic door model is connected to a main air supply line via a solenoid directional valve element; the air supply system performance parameters further comprise an air consumption of the coupler/pneumatic door model; and the air consumption of the coupler/pneumatic door model is determined by performing the following steps:
setting a piston cylinder clearance volume, a piston-to-piston rod area, and a stroke limit based on actual coupler/pneumatic door samples or experimental data, thereby determining the air consumption of the coupler/pneumatic door model during a single uncoupling or door opening/closing operation.

6. The simulation method for the rail vehicle air supply system simulation model according to claim 1, wherein the sanding model is created by performing the following steps:
creating the sanding model based on an air line principle of a rail vehicle sanding apparatus, wherein the sanding model comprises a pressure-reducing valve element and a solenoid directional valve element, and the sanding model is configured to control sanding and drying by controlling opening and closing of the solenoid directional valve element, and to match an air consumption rate for sanding and drying by setting a throttling area.

7. The simulation method for the rail vehicle air supply system simulation model according to claim 1, wherein the whistle model is configured to match an air consumption rate of a rail vehicle whistle by setting an area of a throttling orifice, the whistle model comprises only one port, and the port is connected to a main air supply line via a solenoid directional valve element.

8. The simulation method for the rail vehicle air supply system simulation model according to claim 1, wherein the tread cleaning model is simplified into a pneumatic piston cylinder, the tread cleaning model comprises only one port, the tread cleaning model is connected to a main air supply line via a solenoid directional valve element, and the air supply system performance parameters further comprise an air consumption of the tread cleaning model; and the air consumption of the tread cleaning model is calculated by performing the following steps:
setting a piston cylinder clearance volume, a piston-to-piston rod area, and a stroke limit based on actual tread cleaning device samples or experimental data, thereby determining the air consumption of the tread cleaning model during a single operation.

9. The simulation method for the rail vehicle air supply system simulation model according to claim 1, wherein the air reservoir model comprises a main air reservoir element, a brake air reservoir element, and an air-spring air reservoir element; the air supply system performance parameters further comprise a pressure value of each air reservoir element; and the pressure value of each air reservoir element is determined by performing the following steps:
inputting air pressure data of air supply devices, the vehicle load change information, the air spring load eccentricity information, and the working status information of each air-consuming device into the rail vehicle air supply system simulation model to perform simulation, thereby determining the pressure value of each air reservoir element and generating a pressure curve of each air reservoir element in the rail vehicle air supply system simulation model.

10. A simulation apparatus for a rail vehicle air supply system simulation model, **characterized by** comprising:
an acquisition module, configured to determine a vehicle load change information during a station stop, an air spring load eccentricity information when a vehicle passes through a curved track, and a working status information of each air-consuming device during rail vehicle operation based on a preset actual rail vehicle operation route;
a simulation module, configured to input the vehicle load change information during the station stop, the air spring load eccentricity information, and the working status information of each air-consuming device into the rail vehicle air supply system simulation model, perform simulation on the rail vehicle air supply system simulation model, and output air supply system performance parameters of the rail vehicle air supply system simulation model; the air supply system performance parameters comprise an initial charging time of the rail vehicle air supply system, a charging time under line operation conditions, pressure variations of each air cylinder and air spring, gap variations between an upper cover plate and a wear plate of the air spring, start-stop states of main and auxiliary air compressors, and an air consumption of each air-consuming device; and
the rail vehicle air supply system simulation model comprises an air-consuming device model, an air supply device model, a throttling and control apparatus model, an air reservoir model, a sensor model, and a piping assembly, wherein the air-consuming device model comprises an air spring suspension system model, a brake system model, a coupler/pneumatic door model, a sanding model, a whistle model, and a tread cleaning model.
